Europäisches Patentamt

European Patent Office

Office européen des brevets

(11) Numéro de publication: **0 094 470**
**A1**

## (12) DEMANDE DE BREVET EUROPEEN

(21) Numéro de dépôt: 82810205.3

(22) Date de dépôt: 17.05.82

(51) Int. Cl.³: **A 61 C 19/00**

(43) Date de publication de la demande:
**23.11.83 Bulletin 83/47**

(84) Etats contractants désignés:
**AT BE CH DE FR GB IT LI LU NL SE**

(71) Demandeur: **Bernaz, Gabriel**
**35, rue E. Marziano**
**CH-1227 Carouge(CH)**

(72) Inventeur: **Bernaz, Gabriel**
**35, rue E. Marziano**
**CH-1227 Carouge(CH)**

(74) Mandataire: **Mohnhaupt, Dietrich et al,**
**DIETLIN, MOHNHAUPT & CIE 3, quai du Mont-Blanc**
**CH-1201 Genève(CH)**

(54) **Appareil portable de traitement dentaire.**

(57) L'appareil portable pour le traitement dentaire comprend dans une valise (304) solide et étanche, deux fraises (16) alimentées par un étage de puissance du dispositif électronique de commande apte à délivrer au moins 70 W, une sonde d'aspiration de salive (42) et une seringue de rinçage (40). Les pressions hydrauliques et pneumatiques sont fournies par un compresseur à deux ou trois têtes dont une est uniquement prévue pour l'aspiration de la salive. Les fraises et la seringue peuvent débiter un spray eau/air qui est formé et arrêté de façon que l'eau est seulement injectée dans le flux de l'air lorsque celui-ci est stabilisé, et l'eau s'arrête avant l'air. Tous les composants sauf les outils sont logés dans un boîtier (1) solide et étanche en métal.

Fig.3

## Appareil portable de traitement dentaire

L'invention a pour objet un appareil portable de traitement dentaire permettant l'exécution autonome de tous les travaux de dentiste, n'ayant besoin que de courant électrique qui peut même être fourni par un accumulateur.

On connaît depuis longtemps les sacoches des médecins chirurgiens qui contiennent les appareils, outils et médicaments dont le docteur a besoin pour effectuer au moins un traitement d'urgence chez un patient éloigné du cabinet. Cependant, c'est seulement assez récemment qu'on a eu connaissance d'un appareil portable pour l'usage du dentiste comprenant dans une valise quelques dispositifs, classiques en soi, de traitement dentaire.

Cet appareil connu renferme dans une valise des dispositifs pour effectuer un travail dentaire ambulant d'une certaine envergure. La valise comprend deux micromoteurs électriques à 25 000 et/ou à 40 000 t/min, une pédale pneumatique pour les variations des vitesses du moteur et limitation au potentiomètre, une seringue à 3 fonctions air/eau/spray, un chronomètre et un compresseur faisant également office de pompe à salive.

Cet appareil dentaire portable n'est en principe qu'un simple arrangement côte-à-côte de dispositifs isolés connus en soi.   Il permet certes d'effectuer des traitements ambulatoires dans les endroits isolés ou chez les patients qu'on ne peut pas transporter facilement (personnes âgées ou accidentées, blessés militaires, etc.) mais ne permet pas de faire les interventions chirurgicales dans la cavité buccale ou aux mâchoires, pas de travail d'implantation ni de travail aux prothèses.   Une stérilisation des ouvertures ou blessures n'est notamment pas possible.

Le but de l'invention est de créer un appareil portable de traitement dentaire ne présentant plus les inconvénients et lacunes de l'appareil connu, permettant un travail plus aisé, plus sûr et surtout plus complet, et étant mieux développé et conçu pour la tâche à laquelle il est destiné.

L'appareil selon l'invention est défini avec ses caractères essentiels dans la revendication indépendante tandis que des exécutions spéciales et perfectionnements font l'objet des revendications dépendantes.

Tous les dispositifs et commandes des outils dentaires sont réunis à l'intérieur d'une valise solide étanche dans un boîtier métallique de forme fonctionnelle; en effet, il est le premier avantage de l'appareil selon l'invention que tous les dispositifs constituants, par exemple le compresseur, sont intégrés dans un boîtier ce qui facilite grandement la construction et l'utilisation. L'étage de sortie pour la commande des moteurs des fraises est renforcée.   Le poids de l'appareil est inférieur au poids de l'appareil connu.

L'appareil portable selon l'invention sera expliqué plus en détail dans la description suivante d'une exécution pratique, à titre d'exemple non limitatif, et à l'aide du dessin dans lequel:

- la fig. 1    est un schéma fonctionnel sous forme de diagramme,
- la fig. 2    est une vue frontal du tableau de commande, donc du boîtier,
- la fig. 3    est une vue en perspective de l'appareil, à valise ouverte, pour montrer les commandes, et
- la fig. 4    est un schéma du compresseur à trois têtes.

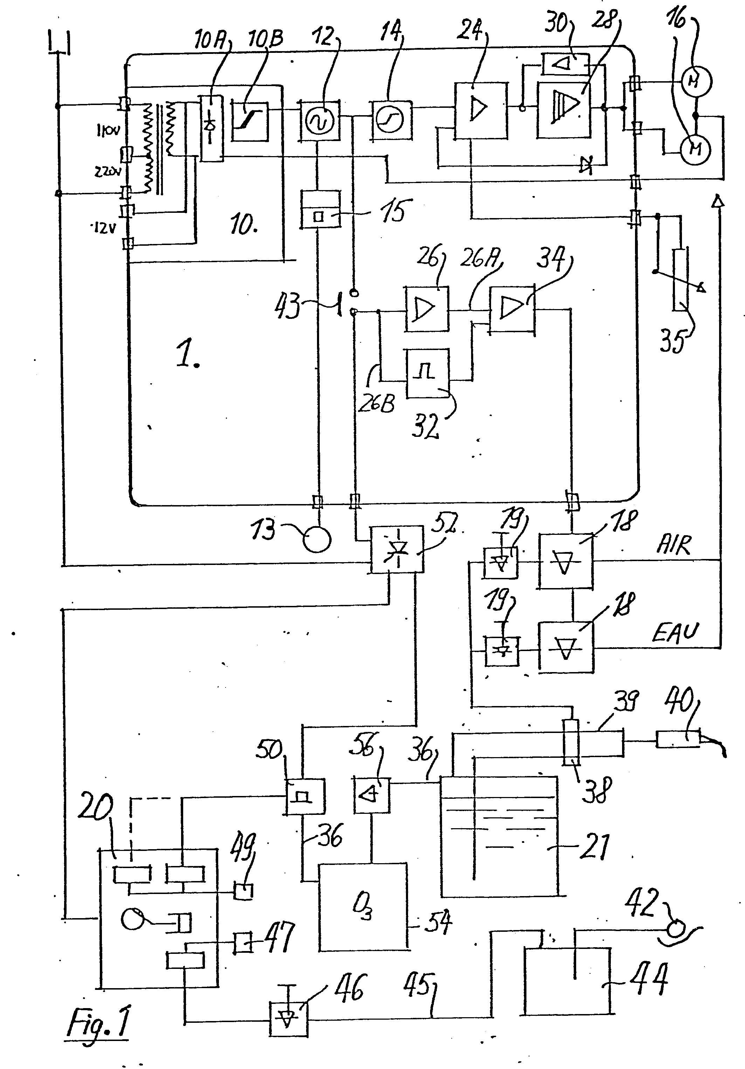

La fig. 1 montre un schéma fonctionnel de l'appareil objet de l'invention, sous une forme simplifiée enfin d'en faciliter la compréhension.

L'électronique de commande est enfermée dans le boîtier 1. Dans ce boîtier, de préférence en métal, on voit d'abord l'unité d'alimentation et de transformation de courant 10. Cette unité peut être raccordée soit au réseau électrique de 110, 127 ou 220 volts alternatifs soit à un accumulateur de 24 V (camion) etc. ou de 12 V (automobiles) en continu. Dans l'unité 10 qui comprend de préférence un dispositif d'auto-commutation de la source raccordée ce qui peut être réalisé avec des relais spéciaux, les tensions et courants nécessaires au fonctionnement des circuits et outils sont produits et stabilisés selon les besoins. Le circuit 10A symbolise par exemple l'étage redresseur tandis que l'unité 10B est un dispositif pour créer l'alimentation stabilisée en courant continu 24 V jusqu'à 3 ampères.

- 4 -                    0094470

L'unité 10 alimente en tension un oscillateur
12 qui produit une oscillation dont l'onde a une forme
au moins approximativement rectangulaire et une fréquence
de 10 kHz environ.  Ni la forme d'onde ni la fréquence de
base sont critiques.  L'oscillation peut être engendrée
par une cellule LC(inductive-capacitive) et entretenue par
un transistor pnp.  L'induction de la cellule LC est
variable.  En effet, l'inductivité consiste en une
bobine dont le noyau peut se déplacer sous l'influence
d'une force pneumatique; le tout forme un transducteur
de pression 15.  Le noyau est toujours ramené dans sa
position originale par un ressort de rappel.  La force
pneumatique est créée par une pédale à coussin fermé 13;
lorsque le dentiste pèse son pied plus ou moins fortement
sur ce coussin, il fait déplacer plus ou moins le noyau
dans la bobine ce qui fait changer directement la fréquence de l'oscillateur.

L'oscillateur 12 est relié à un intégrateuramplificateur 14.  La fréquence de l'oscillateur 12 est
redressée et intégrée par un condensateur; il se produit
une tension dont la valeur est fonction de la fréquence
d'entrée décrite et qui est amplifiée par l'amplificateur.
La tension amplifiée est utilisée d'une part pour la
commande du moteur de la fraise et d'autre part, pour
commander des électrovalves qui ouvrent et ferment
l'admission de l'air ou de l'eau de refroidissement pendant le fraisage.

L'amplificateur 14 transmet donc la tension
qu'il a amplifiée au circuit 24 qui est un préamplificateur comportant également un dispositif électronique
pour faire tourner les moteurs 16 à couple constant.

Ce circuit 24 est donc relié aux moteurs 16 à l'une de
ses entrées. La sortie du circuit 24 est reliée à
l'étage de puissance 28 qui excite directement le ou
les moteurs 16. Normalement, le dispositif 16 comporte deux moteurs, l'un ayant un maximum de 20 000 t/min
tandis que l'autre peut tourner jusqu'à 40 000 t/min,
les deux sous 24 V et 3 A.

Le circuit 30 est inséré en parallèle entre
l'étage final 28 et les moteurs 16. Il s'agit d'un
autofrein; dès que le courant aux moteurs est coupé,
ceux-ci travaillent en générateurs. La tension ainsi
créée est appliquée à un amplificateur qui produit une
tension inverse correspondante et amplifiée. Cette
tension étant appliquée à l'étage finale 28, les moteurs
16 sont chargés avec une polarité inverse ce qui provoque leur arrêt immédiat. Ce dispositif de freinage
instantané 30 est très important pour le travail du
dentiste. En effet, la fraise doit s'arrêter immédiatement lorsque le dentiste lâche la pédale 13 car
autrement, le patient peut être blessé quand la fraise
dévie vers les gencives, une dent peut être creusée trop
profondément, etc.

La même tension de sortie de l'amplificateur 14
est appliquée à l'entrée d'un étage de changement d'impédance 26; la tension de sortie a la même polarité que la
tension d'entrée mais est disponible avec une basse impédance. Elle commande ou bien directement, symbolisé
par la ligne 26A, l'étage de puissance 34 de commande
d'électrovalves 18, ou bien par la ligne 26B un circuit
temporisateur 32 qui est lui-même relié à l'étage de
puissance 34. Le but et le fonctionnement du circuit
temporisateur sont décrits plus bas.

- 6 -                                    0094470

L'appareil selon l'invention comprend en plus
un dispositif compresseur-aspirateur-réservoir pressurisé.
Ce dospositif comporte un compresseur 20 destiné à fournir
de l'air comprimé qui est nécessaire pour nettoyer le
champ de travail du dentiste, pour assurer l'aspiration
de la salive du patient, et pour mettre sous pression
le réservoir d'eau 21. Les débits de l'air et de l'eau
sous pression sont commandés par la série d'électrovalves
18 dont le fonctionnement sera expliqué plus bas. Le
compresseur 20 est normalement un modèle à membrane.

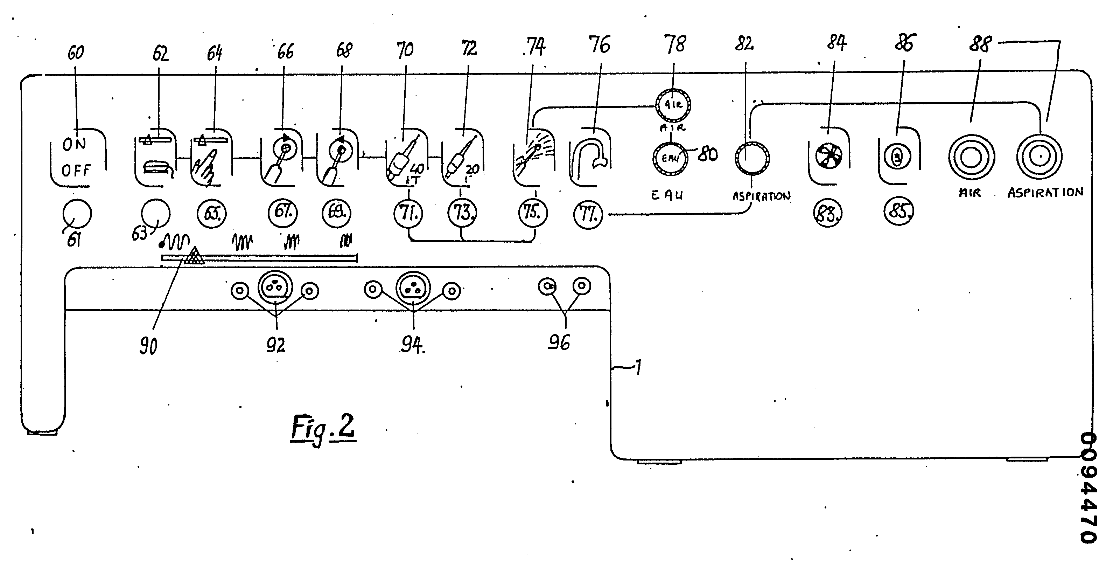

Finalement, un tableau de commande    (fig. 2)
est prévu comportant les boutons-poussoirs, interrupteurs,
lampes-témoins et commutateurs nécessaires au fonctionnement de l'appareil. En particulier, un nombre de
commutateurs et prévu pour pouvoir effectuer certaines
fonctions soit automatiques, soit par commande manuelle,
soit par commande par pédale pneumatique.

Tous les circuits décrits sont de préférence
réalisés avec les transistors, circuits intégrès etc.
L'électronicien sera à même de dessiner et de construire
ces circuits dont le but et le fonctionnement ont été
décrits. Ces circuits comportent les dispositifs de
protection d'usage, les corps refroidisseurs etc.;
ces pièces ne sont pas représentées. L'appareil comprend
en plus de préférence une horloge pour l'usage du dentiste.

Le boîtier 1 est de préférence une exécution
étanche, et les commandes, interrupteurs etc. sont des
touches à effleurement. De ce fait, l'intérieur du
boîtier ne peut souffrir de la condensation, de la poussière, de la corrosion etc. L'appareil contient égalementment, dans la partie de l'électronique, un potentiomètre 35 associé à l'amplificateur 24 pour régler la vitesse
maximum des moteurs 16, la pédale 13 agissant donc sur
la vitesse des moteurs "disponible" entre l'arrêt et la
vitesse maximum choisie par le potentiomètre 35.  A
l'extérieur du boîtier 1, les fraises sur les moteurs 16
sont reliées par des conduites 17A et 17B aux électrovalves 18 qui ouvrent et ferment l'admission de l'eau
ou de l'air (ou tous les deux)  sous pression.  Ces
fluides proviennent, à travers des régulateurs de débit
19, du réservoir 21 (pour l'eau) et de la ligne 36 qui
rélie le compresseur 20 au réservoir 21, et la double
conduite 37 de liaison prend naissance à un bloc de
déviation en T 38.  Une deuxième conduite 39, flexible
celle-ci, va vers une seringue 40 qui est à commande
manuelle et qui délivre de l'eau, de l'air ou un spray
air/eau, ceci pour rincer le champ de travail.

Une sonde d'évacuation de salive 42 est reliée
à un séparateur de salive 44 dont la conduite de sortie
45 est branchée, via un régulateur de débit 46, à l'une
des tubulures d'admission du compresseur 20.  L'échappement de la tête correspondante du compresseur 20 va vers
l'extérieur par un filtre 47.

La deuxième tête ou la deuxième et troisième
têtes du compresseur aspirent de l'air à travers un
filtre 49 (dont les pores ont un diamètre d'au plus
3 $\mu$) et délivrent de la pression pneumatique par la
ligne 36 vers le réservoir 21.  L'air comprimé passe
par un pressostat 50 qui est électriquement relié à
un dispositif de commande 52 du compresseur 20, un
générateur d'ozone 56 et une électrovalve d'anti-retour
56, dans le réservoir 21.  Le pressostat peut également être situé sur le réservoir 21.

Un caractère important de l'invention est le
fait que, de par l'utilisation d'un compresseur à deux
ou trois têtes, l'aspiration de la salive n'est jamais
interrompue car le compresseur peut travailler en continu.
Si les fraises ne sont pas enclenchées, l'interrupteur 43
est ouvert, et la commande 52 ne reçoit pas de tension
de l'amplificateur 14.  L'enclenchement et le déclenchement du compresseur 20 se fait donc uniquement
par la commande du pressostat 50.  Par contre, lorsque
le dentiste enclenche la fraise par l'interrupteur 43,
le pressostat ne commande plus l'arrêt du compresseur
mais ouvre seulement une vanne de surpression (non
représentée) où met en court-circuit l'entrée et la
sortie de la tête correspondant du compresseur.  De ce
fait, la salive peut être évacuée en continu.

La fig. 2
donne une vue frontale de la face avant du boîtier de
l'appareil avec toutes les commandes.

On voit sur une ligne, de gauche à droite,
les organes suivants: touche interrupteur général 60,
touche "choix de la vitesse au pied" (dans les limites
du curseur limiteur) 62, touche "choix de la vitesse à la
main" 64, touche "sens de rotation droit de la fraise" 66,
touche "sens de rotation gauche de la fraise" 68, choix
du moteur "40 kT/min" ou "120 kT/min" 70, touche
"choix du moteur  20 kT/min" 72, "spray automatique sur la
fraise" 74 et "aspiration de la salive" 76.  Les touches
en fonction sont indiquées par les lampes témoins
(des LED) 61, 63, 65, 67, 69, 71, 73, 75 et/ou 77.

Suivent, de gauche à droite, les boutons pour
régler le débit de l'air et de l'eau 78 et 80 (voir la
référence 19 à la fig. 1) et de la puissance de l'aspiration 82 qui réagit sur le régulateur 46. Deux autres
touches 84 et 86 (avec leurs lampes témoin 83 et 85)
commandent la mise en marche du compresseur 20 et
du générateur d'ozone 54, respectivement. Pour terminer,
deux raccords rapides 88 sont prévus pour l'air sous
pression et l'aspiration de la salive.

Au-dessus des lampes témoin 63 à 69 se trouve
la commande 90 du potentiomètre 35 pour choisir la
vitesse limite des moteurs 16. Une troisième rangée
d'organes comprend deux unités de raccordement électrique, hydraulique et pneumatique 92 et 94 des deux
moteurs 16 avec leurs fraises. Finalement, le tuyau,
double de la seringue 40 se branche sur les raccords
rapides 96.

Bien qu'une autre disposition des commandes
et raccords puisse être prévue par l'homme du métier,
celle qui est représentée à la fig. 2 a de nombreux
avantages et est considérée comme étant très pratique.

Comme on voit sur la fig. 2, la partie gauche
du boîtier 1 a la forme d'un pont. Ceci permet de passer
les conduites et câbles des outils à brancher dans les
prises (ou raccords) 92, 94 et 96, par dessous du boîtier 1
et de les ranger à cette place.

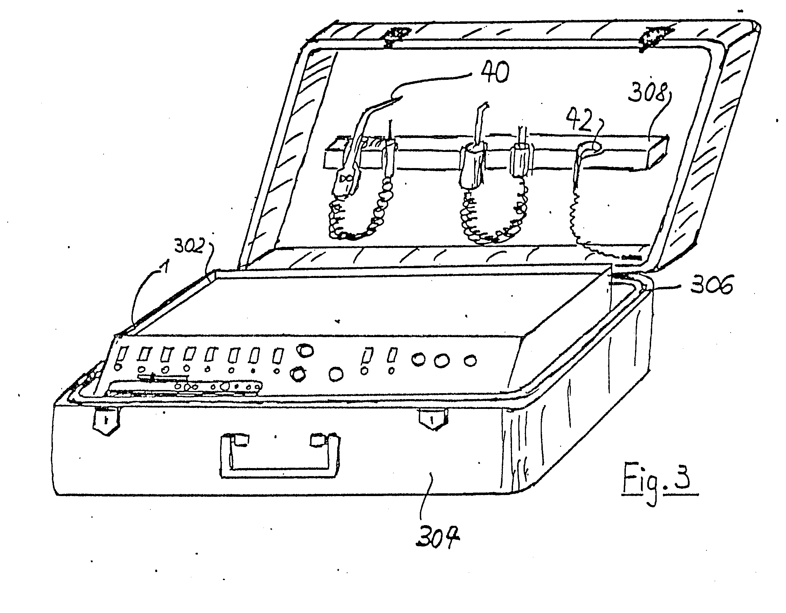

La fig. 3 montre en perspective l'appareil
selon l'invention placé dans une valise 304. Le boîtier 1
est couvert par un plateau pose-instruments 302 entouré d'un bord saillant de 5 mm environ, en acier inoxydable de sorte que le dentiste puisse disposer d'une table de travail où il peut mélanger du ciment, poser les instruments, mettre les bouteilles de désinfectant etc. Les outils tels que fraises, seringue de rinçage 40, aspire-salive 42 etc. sont tenus en place par une pièce 308 en élastomère ou matériel analogue comportant des évidements corrspondants. Le rebord de la partie inférieure de la valise 304 comporte une rainure circonférentielle dans laquelle est situé un 0-ring 306 qui sert à rendre étanche la valise fermée.

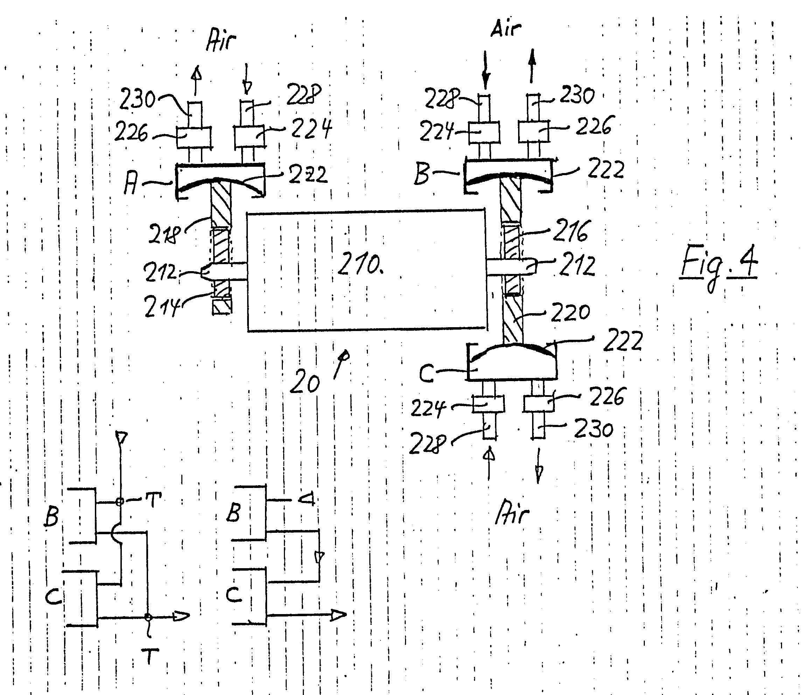

Le nouveau compresseur 20 à trois têtes, utilisé dans l'appareil selon l'invention, est schématiquement représenté à la fig. 4. Il comporte un bloc moteur 210 dont l'axe 212 le dépasse des deux côtés. Chaque bout d'axe porte un excentrique 214 et 216. Une bielle à action unilatérale 218 coulisse sur l'excentrique gauche 214 tandis que l'excentrique droit 216 travaille avec une bielle 220 à double action.

Trois têtes de compression A, B et C sont prévues dans lesquelles sont tendues des membranes 222.
Ces membranes sont excitées en mouvement de va-et-vient
par les bielles 218, 220. Chaque tête est encore équipée
de tubulures d'admission 228 et de sortie (compression)
230 ainsi que de soupapes (clapets) d'aspiration 224 et
de compression 226.

On a déjà mentionné qu'une des têtes (c'est ici
la tête A) travaille uniquement en aspiration pour
évacuer la salive, et que les autres têtes (B et C) servent
à mettre de l'air et de l'eau sous pression. On peut
utiliser les deux têtes en parallèle, en ajoutant deux
pièces en T (voir en bas à gauche sur la fig. 4), en
reliant les deux admissions 228 et les deux sorties 230
en paires. Ce branchement augmente par le facteur 2, le
débit d'air. Par contre, le branchement en série (voir
en bas à droit sur la fig. 4) qui consiste à relier la
sortie 230 de la tête B à l'admission 228 de la tête
C, double la pression disponible.

Selon l'invention, on utilise les deux possibilités de branchement, soit automatique soit par choix manuel,
selon les demandes et besoins de travail.

L'appareil décrit fonctionne comme suit:
Dès qu'il est mis sous tension et l'interrupteur général 60 enclenché, le compresseur 20 se met
en marche et comprime de l'air dans l'espace libre de
réservoir 21, tenant 0,5 l d'eau environ et ayant été
rempli préalablement. Dès que la pression de fonctionnement, située en général autour de 0,5 à 0,8 bar, est
atteinte, le pressostat 50 arrête le compresseur 20. Le
dentiste peut maintenant faire marcher la seringue 40
pour rincer la bouche à l'eau ou à l'air selon besoin.

Il choisit sa fraise, y compris l'outil de base avec son
moteur de 20 000 ou 40 000 tours, et peut commencer
son travail.  Dès que la pression dans le réservoir 21
atteint la valeur minimum réglée, le pressostat remet
le compresseur 20 en marche.  Au cas où la touche 76
(fig. 2) avait été effleurée ou la fraise travaille, le
pressostat ne peut arrêter le compresseur mais limite
uniquement la pression comme déjà décrit ci-dessus.

La vitesse du moteur de la fraise est normalement réglée avec la pédale pneumatique 13, qui fait
déplacer le noyau magnétique dans la bobine de l'oscillateur 12 comme déjà décrit ci-dessus.  Dès que le moteur
de la fraise tourne à 2000-3000 t/min, un spray de
refroidissement du champ de travail est enclenché.
Cet enclenchement se fait, selon l'invention, en deux
étapes; d'abord, l'électrovalve du bloc 18 est ouverte
qui admet de l'air comprimé à la tête de la fraise et
ensuite, avec un retard pouvant être réglé préalablement
entre environ 0,1 et 2 sec, l'électrovalve 18 qui commande
l'admission de l'eau sous pression provenant du réservoir
21.

Quand la fraise est arrêtée ou la pédale lachée
pour que le moteur tourne moins vite que 2000 à 3000 t/min,
l'électrovalve "eau" se ferme d'abord suivie de la fermeture de l'électrovalve "air" après un délai de 0,1 à
2 sec également.

Ces retards ou temporisations sont réglés et
commandés par le circuit 32 qui comporte un organe de
retard, par exemple un C.I. 555 ou 556.  Le but de ces
temporisations, est d'éviter que de l'eau sous pression
frappe la dent avant la formation d'un spray correct.

- 13 -                              0094470

On a trouvé que ce spray ne se forme correctement
qu'après la stabilisation d'un courant d'air pour
établir et maintenir un rapport approprié pression
et débit d'air: pression et débit d'eau; en quelque
sorte, on doit injecter de l'eau dans un courant d'air
établi.  Le même fait s'applique à l'arrêt du spray:
il faut d'abord fermer l'eau avant que l'air soit
arrêté pour couper correctement le spray et pour
éviter notamment qu'un jet d'eau vient frapper les
dents sensibilisées.

       D'autres avantages de l'utilisation du nouvel
appareil sont tirés du fait que, selon l'invention, le
compresseur comporte deux ou trois têtes de compression.
Dans l'appareil connu, le compresseur ne comprend qu'une
seule tête.  Selon la description de fonctionnement
déjà faite ci-dessus, ce compresseur ne peut travailler
que quand son manostat le lui permet, à savoir lorsque
de l'air comprimé ou le spray sont utilisés par le dentiste.  Etant donné que seule l'aspiration de compresseur peut être utilisée pour l'aspiration de la
salive du patient, une aspiration de salive en continu
n'était pas possible avec les compresseurs utilisés
jusqu'à maintenant.  En plus, l'air aspiré par le compresseur était en contact avec la salive (qui est séparée
de l'air d'aspiration dans un réservoir non représenté)
ce qui n'est pas hygiènique car il peut toujours contenir
de fines gouttelettes de salive.  Selon un aspect de
l'invention, le compresseur à deux têtes permet d'éviter
ce problème et d'apporter par la séparation des fonctions
de nouveau avantages.  Comme déjà mentionné, on fait
travailler le compresseur sans arrêt, dès qu'une
aspiration de salive en continu est nécessaire, une
tête servant à maintenir la pression dans le réservoir 21, et l'autre servant à aspirer la salive par un courant d'air qui est ensuite rejeté à l'air libre. L'air comprimé n'est donc plus contaminé par de la salive.

En plus, les deux têtes peuvent être utilisées, lorsque l'aspiration de salive n'est pas enclenchée, pour augmenter le débit de l'air comprimé. En effet, un circuit automatique électronique et pneumatique à vannes à tiroir, non représenté, permet dans ce cas de mettre la sortie des deux têtes en série ou en parallèle pour alimenter le réservoir 21. On obtient de cette façon une pression plus élevée ou un débit plus grand, selon besoin. Cette pression plus élevée permet de faire marcher une turbine et d'exécuter divers travaux de laboratoire.

Une solution encore meilleure est l'utilisation d'un compresseur à trois têtes spécialement conçu pour l'appareil selon l'invention, voir la fig. 4. La sortie de deux têtes et connectée en série pour doubler la pression d'une tête; on arrive à une pression de sortie de l'ordre de 3 bars ce qui permet l'utilisation d'une turbine pour fraiser. La sortie de deux têtes peut également être connectée en parallèle pour augmenter le débit d'air comprimé. La troisième tête est indépendente des deux premières têtes et sert uniquement d'aspiration de la salive; le débit de cette tête peut être réglé au maximum car une grande pression n'est pas nécessaire.

Le compresseur est un modèle servant comme compresseur et pompe à vide, à marche silencieux, ayant une puissance électrique de 10 à 25 W environ. Son encombrement ne dépasse généralement pas 110 x 150 x 200 mm.

Il est à noter qu'il n'était pas évident de prévoir un compresseur à deux ou trois têtes car, normalement, on aurait songé à ajouter un deuxième compresseur ou une pompe pneumatique pour la fonction d'évacuation de la salive.

Il est également à noter que l'alimentation 10 et l'étage de puissance 28 sont conçus, selon l'invention, pour débiter 3 ampères ou plus sur 24 volts fournissant dont au moins 70 W, grâce à l'utilisation de transitors darlington à haut coefficient d'amplification $\beta$ (rapport courant d'émetteur/courant de base) et de grande puissance. Ces transistors permettent le branchement de moteurs de fraises de laboratoire et de meules donc un travail plus sûr et la possibilité de travailler les prothèses. Ces transistors sont connus en soi et se trouvent sur la marché.

Il est également prévu un générateur d'ozone 54 pour le travail de stérilisation ou antiseptique dans la cavité buccale. Ce générateur, de construction classique (un tube à effluve monté dans un boîtier étanche à travers duquel passe de l'air), est monté en amont ou aval du compresseur, et son alimentation peut être enclenchée selon besoin par la touche 86. Cet ozoniseur permet de changer l'air comprimé qui se trouve dans l'espace libre du réservoir 21, avec une quantité et concentration déterminées d'ozone; en même temps, l'eau de réservoir est stérilisée.

## REVENDICATIONS

1. - Appareil portable de traitement dentaire, comprenant dans une valise deux fraises, une seringue de rinçage et un tuyau d'aspiration de salive comme outils du dentiste, un dispositif de commande des outils avec pédale pneumatique et un compresseur, caractérisé par un étage électronique de puissance pour la commande d'un moteur de fraise ou de meule dont la puissance électrique est d'au moins 70 W, et par un compresseur à deux ou trois têtes associé à un dispositif de commande permettant de relier les têtes en parallèle, en série ou en travail indépendant de compression, d'une part, et d'aspiration de salive, d'autre part.

2. - Appareil portable selon la revendication 1, caractérisé en ce que le compresseur est à deux têtes et que le dispositif de leur commande est agencé à faire travailler une tête en compression et l'autre en aspiration de salive, la sortie de cette deuxième tête étant reliée à l'air libre, ou bien les deux têtes en compression en mettant les têtes en série ou en parallèle, selon les besoins du travail.

3. - Appareil selon la revendication 1, caractérisé en ce que le compresseur est à trois têtes et que le dispositif de leur commande est agencé à faire travailler les deux premières têtes en compression, en les mettant ou bien en série ou bien en parallèle, selon les besoins du travail, la troisième tête travaillant invariablement en aspiration de salive, la sortie de cette troisième tête étant reliée à l'air libre.

4. - Appareil selon l'une des revendications

**0094470**

précédentes, caractérisé en ce qu'un générateur d'ozone
est prévue avant ou après le compresseur pour ozoniser
l'air comprimé.

5. - Appareil selon l'une des revendications
précédentes, comprenant au moins une fraise munie d'un
tuyère de rinçage et de refroidissement par de l'air
comprimé, de l'eau ou un spray composé d'air et d'eau,
caractérisé par un circuit électronique de temporisation
pour retarder de 0,1 à 1 secondes l'admission d'eau par
rapport à celle d'air lorsque la fraise travaille au
spray, et pour effectuer le déclenchement du courant
d'eau 0,1 à 1 secondes avant le déclenchement du
courant de l'air, afin de stabiliser le spray.

6. - Appareil selon l'une des revendications
précédentes, caractérise en ce que tous ses constituants
sont enfermés dans une valise étanche à l'eau par un
O-ring circulaire entourant l'ouverture de la valise.

7. - Appareil selon l'une des revendications
précédentes, caractérisé par un circuit d'auto-adaptation
à la source de courant à laquelle l'appareil peut être
raccordé.

8. - Appareil selon l'une des revendications
précédentes, caractérisé en ce que l'électronique,
toutes les commandes (sauf la pédale pneumatique), le
compresseur et les réservoirs sont logés dans un boîtier
solide et étanche, et que les contacteurs et interrupteurs
électriques sont actionnés par des touches à effleurement.

**Fig. 1**

1/4

0094470

**0094470**

_Fig.2_

0094470

Fig.3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | A 61 C 19/00 |
| X | FR-A-2 037 573 (MAJESCO) *Pages 5-17; figures* | 1 | |
| A | | 6,7,8 | |
| | --- | | |
| A | US-A-4 286 949 (HOLT) *Abrégé; figures* | 1 | |
| | --- | | |
| A | CH-A- 264 750 (VADUZ) *Revendications; figures* | 1 | |
| | ----- | | |

**DOMAINES TECHNIQUES RECHERCHES (Int. Cl. ³)**

A 61 C

Le présent rapport de recherche a été établi pour toutes les revendications

| Lieu de la recherche | Date d'achèvement de la recherche | Examinateur |
|---|---|---|
| LA HAYE | 10-01-1983 | VANRUNXT J.M.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

-------------------------------------------------------

& : membre de la même famille, document correspondant

OEB Form 1503. 03.82